# EUROPÄISCHE PATENTSCHRIFT

(11) **EP 3 164 283 B1**
(45) Veröffentlichungstag und Bekanntmachung des Hinweises auf die Patenterteilung: **01.01.2020**
(21) Anmeldenummer: 15734111.6
(22) Anmeldetag: 29.06.2015
(51) Int. Cl.: B60J 5/10, E05F 15/611, F16D 59/00, F16H 25/24

(54) **ANTRIEBSANORDNUNG UND KLAPPENSTEUERUNG**
DRIVE ARRANGEMENT AND HATCH CONTROL
ENSEMBLE D'ENTRAÎNEMENT ET COMMANDE DE VOLET

(30) Priorität: 02.07.2014 DE 102014212863
(43) Veröffentlichungstag der Anmeldung: 10.05.2017
(73) Patentinhaber: Stabilus GmbH, 56070 Koblenz (DE)
(72) Erfinder: MÜLLER, Thomas, 56244 Leuterod (DE); HILLEN, Jörg, 56283 Nörtershausen (DE); WIELAND, Mathias, 56070 Koblenz (DE)
(74) Vertreter: Weickmann & Weickmann PartmbB
(86) Internationale Anmeldenummer: PCT/EP2015/064710
(87) Internationale Veröffentlichungsnummer: WO 2016/001147

(56) Entgegenhaltungen:
- EP-A1- 1 186 800
- WO-A1-2011/037023
- DE-A1-102009 029 167
- DE-A1-102012 110 505
- DE-U1-202011 106 110
- US-A1- 2005 155 444
- TOOTEN K H ET AL: "STAND DER ENTWICKLUNG UND EINSATZMOEGLICHKEITEN VON LASTMOMENTSPERREN", ANTRIEBSTECHNIK, VEREINIGTE FACHVERLAGE, MAINZ, DE, Bd. 32, Nr. 1, 1. Januar 1993 (1993-01-01) , Seiten 57-61, XP000338549, ISSN: 0722-8546

## Beschreibung

Die vorliegende Erfindung betrifft eine Antriebsanordnung, umfassend eine Motorantriebswelle, welche Antriebskraft eines Motors bereitstellt, eine Arbeitswelle, über welche die Antriebsanordnung Drehkraft abgibt und empfängt, eine Kopplung, welche dafür eingerichtet ist, Drehkraft von der Motorantriebswelle zur Arbeitswelle und von der Arbeitswelle zur Motorantriebswelle zu übertragen, und eine Bremsanordnung, welche einer Drehbewegung der Arbeitswelle eine Bremskraft entgegensetzt Ferner betrifft die Erfindung eine Klappensteuerung mit einer um eine Schwenkachse schwenkbar gelagerten Klappe, einem Motor und einer Antriebsanordnung der genannten Art.

Im Stand der Technik sind Antriebsanordnungen insbesondere zur elektromechanischen Ansteuerung von Türen oder Klappen bekannt, beispielsweise Vorrichtungen zum elektromechanischen Öffnen beziehungsweise Schließen von Fahrzeugklappen. Dabei wird die Kraft des Elektromotors durch eine Kopplung auf eine die Klappe tragende Arbeitswelle übertragen. Je nach Anwendungsgebiet kommt es bei der Verwendung bekannter Vorrichtungen zwangsläufig auch zu Situationen, in denen von Seiten der Arbeitswelle ein Drehmoment in die Antriebsanordnung eingegeben wird. Insbesondere bei sich vertikal bewegenden Klappen wird durch die Gewichtskraft der Klappe Drehkraft in die Antriebswelle eingeleitet. Ferner kann im Gebrauch der Antriebsanordnung durch manuellen Bewegung der Klappe durch den Nutzer ein Drehmoment in die Antriebswelle eingegeben werden.

Um eine übermäßige Belastung des Motors bei einer Drehkraftübertragung von der Arbeitswelle zur Motorantriebswelle zu vermeiden oder ein unbeabsichtigtes Verstellen der Klappe (zum Beispiel durch Schwerkrafteinfluss) bei ausgeschaltetem Motor zu verhindern, weisen bekannte Antriebsanordnungen vereinzelt Bremsanordnungen auf, welche der Drehung der Wellen der Antriebsanordnung einen vorbestimmten Widerstand entgegensetzen. Im Falle von sich in vertikaler Richtung bewegenden Klappen ist die Bremskraft der Bremsanordnung so bemessen, dass bei stillstehendem Motor eine eigenständige Abwärtsbewegung der Klappe verhindert wird, sodass die eingestellte Schwenkposition der Klappe gehalten wird. Darüber hinaus sind Bremsanordnungen bekannt, welche eine bestimmte Drehstellung zwischen Arbeitswelle und Motorantriebswelle bei stillstehendem Motor feststellen, um eine manuelle Drehung des Motors durch den Benutzer und damit eine mögliche Überlastung des Motors zu verhindern.

Derartige Antriebsanordnungen sind beispielsweise aus der gattungsgemäßen DE 20 2011 106 110 U1, der DE 10 2012 110 505A1, der EP 1 186 800 A1, der WO 2011/0370231 A1, der DE 10 2009 029 167 A1, der US 2005 155 444 A1 und dem Artikel "Stand der Entwicklung und Einsatzmöglichkeiten von Lastmomentsperren", Antriebstechnik, Vereinigte Fachverlage, Mainz von Karlheinz Tooten et al. bekannt.

Bei Antriebsanordnungen mit Bremsanordnung der vorstehend genannten Art ergibt sich der Nachteil, dass die Bremswirkung der Bremsanordnung bei Betrieb der Antriebsanordnung von dem Motor überwunden werden muss, um die Arbeitswelle in Drehung zu versetzen. Der vorstehend beschriebene Nutzen einer Bremsanordnung geht somit auf Kosten der Energieeffizienz beim Betreiben der Antriebsanordnung.

Vor dem Hintergrund dieser Problematik ist es Aufgabe der vorliegenden Erfindung, eine Antriebsanordnung sowie eine Klappensteuerung bereitzustellen, welche einen hohen Funktionsumfang aufweisen und gleichzeitig mit hoher Energieeffizienz arbeiten.

Nach einem ersten Aspekt wird die vorstehende Erfingungsaufgabe gelöst durch eine Antriebsanordnung mit den Merkmalen des Anspruchs 1.

Nach einem wichtigen Merkmal der vorliegenden Erfindung des ersten Aspekts ist die von einer Bremsanordnung erzeugte Bremskraft im Falle einer Übertragung von Drehkraft von der Arbeitswelle zur Motorantriebswelle größer als im Falle einer Übertragung von Drehkraft von der Motorantriebswelle zur Arbeitswelle, wobei vorzugsweise im letzteren Falle die Bremsanordnung im Wesentlichen überhaupt keine Bremskraft entfaltet. Abhängig von der Richtung der Drehkraftübertragung (von der Arbeitswelle zur Motorantriebswelle oder in entgegengesetzter Richtung) ändert die Bremsanordnung somit ihre Bremskraft beziehungsweise ihre Bremswirkung. Im Ergebnis ist die Bremsanordnung in gewünschter Stärke wirksam, wenn an der Arbeitswelle eine Drehkraft eingegeben wird, beispielsweise aufgrund der Schwerkraft einer an der Arbeitswelle angeschlossenen Klappe oder aufgrund der Eingabe eines Drehmoments von einem Nutzer, während im Falle der Kraftübertragung ausgehend vom Motor die Bremsanordnung in einen reduzierten Bremsmodus oder einen Modus mit gelöster Bremse geschaltet ist, sodass der Motor beim Antreiben der Arbeitswelle nur eine reduzierte Bremskraft oder vorzugsweise im Wesentlichen überhaupt keine Bremskraft überwinden muss. Demzufolge kann die Motorleistung effizienter genutzt werden und die Energieeffizienz der Antriebsanordnung kann gesteigert werden.

In einer bevorzugten Ausführungsform der Erfindung ist die Kopplung zur Übertragung von Drehkraft in beide Drehrichtungen eingerichtet, das heißt bei Übertragung von Drehkraft von der Motorantriebswelle zur Arbeitswelle kann die Arbeitswelle durch Motorkraft in beide Drehrichtungen gedreht werden oder/und die Antriebsanordnung ist dafür eingerichtet, eine Drehbewegung von der Arbeitswelle in beiden Drehrichtungen zu empfangen und entweder abzubremsen oder zuzulassen. Auf diese Weise wird der Funktionsumfang der Antriebsanordnung erhöht. Im Falle der Übertragung von Drehkraft von der Arbeitswelle zur Motorantriebswelle kann in einer Variante der Erfindung die Bremsanordnung in einer zweiten Drehrichtung eine erste Bremskraft erzeugen, die der Drehbewegung entgegengesetzt wird, wobei die Bremsanordnung bei Übertragung der Drehkraft von der Arbeitswelle zur Motorantriebswelle in einer der zweiten Drehrichtung entgegengesetzten ersten Drehrichtung eine dritte Bremskraft erzeugt und der Drehbewegung entgegensetzt, welche kleiner ist als die erste Bremskraft, oder im Wesentlichen keine Bremskraft entgegensetzt. Bei der Übertragung von Drehkraft von der Arbeitswelle zur Motorantriebswelle kann die Bremsanordnung somit drehrichtungsabhängig arbeiten, sodass sie in einer Drehrichtung die erste Bremskraft erzeugt und in der anderen Drehrichtung eine kleinere dritte Bremskraft oder gar keine Bremskraft erzeugt. Eine Antriebsanordnung dieser Variante ist beispielsweise von besonderem Vorteil, wenn die Arbeitswelle mit einer vertikaler Richtung bewegbaren Klappe verbunden ist und die Bremsanordnung bei einer Abwärtsbewegung der Klappe die erste (höhere) Bremskraft aufbringt, um die Klappe auch bei stillstehendem Motor in der eingestellten Position zu halten und gleichzeitig eine manuelle Aufwärtsbewegung der Klappe durch den Nutzer zuzulassen.

Erfindungsgemäß ist vorgesehen, dass die Kopplung ein erstes Kopplungsbauteil aufweist, welches an einem Element aus Arbeitswelle und Motorantriebswelle angeordnet oder ausgebildet ist, und dass die Kopplung ein zweites Kopplungsbauteil aufweist, welches an dem anderen Element aus Arbeitswelle und Motorantriebswelle angeordnet oder ausgebildet ist, wobei die beiden Kopplungsbauteile zur Übertragung von Drehkraft miteinander gekoppelt oder koppelbar sind. Das erste Kopplungsbauteil kann dabei einen ersten Anschlag aufweisen, welcher in Bezug auf die Drehachse in Umfangsrichtung an einem zweiten Anschlag des zweiten Kopplungsbauteils anschlägt, um den zweiten Anschlag bei einer Drehung in einer ersten

Drehrichtung mitzunehmen und Drehkraft auf das zweite Kopplungsbauteil in der ersten Drehrichtung zu übertragen. Derartige Drehanschläge ermöglichen eine formschlüssige Kopplung zwischen Kopplungsbauteilen und somit eine zuverlässige Mitnahme der Drehbewegung in einer relativ einfachen mechanischen Anordnung.

Bei Verwendung einer Kopplung mit Drehanschlägen der vorstehend genannten Art wird ferner bevorzugt, dass das erste Kopplungsbauteil einen dritten Anschlag aufweist, welcher in Bezug auf die Drehachse in Umfangsrichtung an einem vierten Anschlag des zweiten Kopplungsbauteils anschlägt, um den vierten Anschlag bei einer Drehung in einer der ersten Drehrichtung entgegengesetzten zweiten Drehrichtung mitzunehmen und Drehkraft auf das zweite Kopplungsbauteil in der zweiten Drehrichtung zu übertragen, wobei dann, wenn der dritte Anschlag an dem vierten Anschlag anschlägt, der erste Anschlag im Abstand von dem zweiten Anschlag angeordnet ist, so dass ein vorbestimmter Leerlaufwinkel zwischen den Kopplungsbauteilen vorhanden ist Die Bereitstellung des Leerlaufwinkels kann vorteilhaft dafür ausgenutzt werden zu erkennen, in welcher Richtung die Übertragung der Drehkraft erfolgt, das heißt von der Arbeitswelle zur Motorantriebswelle oder von der Motorantriebswelle zur Arbeitswelle. Genauer gesagt kann durch Bereitstellung des Leerlaufwinkels ein Winkelbereich geschaffen werden, innerhalb welchem sich die beiden Kopplungsbauteile zueinander verdrehen können ohne einander sofort mitzunehmen, sodass eine innerhalb des Leerlaufwinkels angeordnete Umschalteinrichtung erkennen kann, ob der Drehantrieb vom ersten Kopplungsbauteil oder vom zweiten Kopplungsbauteil ausgeht, das heißt, ob die Drehkraft von der Motorantriebswelle her eingegeben wird oder von der Arbeitswelle her eingegeben wird. Ein Teil der Bremsanordnung ist somit in Form der genannten Umschalteinrichtung vorzugsweise dann wirksam, wenn sich die beiden Kopplungsbauteile innerhalb des Leerlaufwinkels relativ zueinander drehen.

Vorzugsweise umfasst die Bremsanordnung einen mit der Arbeitswelle oder mit der Motorantriebswelle (gegebenenfalls mit dem jeweils zugeordneten Kopplungsbauteil) bewegten Bremskörper, welcher im Bremsfall gegen eine relativ zur Arbeitswelle und zur Motorantriebswelle festgehaltene Bremsfläche gedrückt wird. Dies ermöglicht eine reibschlüssige Bremswirkung und somit eine gewisse Abdämpfung des Bremsvorgangs zur Schonung von Material und Reduzierung von Geräuschen. Der Bremskörper kann dabei ein Wälzkörper sein, um Verschleiß der Bremsanordnung zu reduzieren. Die Bremsfläche kann die Drehachse ringförmig umlaufen, wodurch sich eine einfache Integration der Bremsanordnung ergibt.

Eine zuverlässige und gleichzeitig mechanisch relativ einfache Bremsanordnung beziehungsweise Kopplung kann erreicht werden, wenn der Bremskörper an einer Steuerfläche des ersten Kopplungsbauteils entlang einer Verlaufsrichtung der Steuerfläche abrollt oder abgleitet, wobei die Verlaufsrichtung der Steuerfläche orthogonal zu Drehachse und in einem Winkel zur Radialrichtung, vorzugsweise zumindest abschnittsweise orthogonal zur Radialrichtung, orientiert ist, oder/undwobei die Steuerfläche durch eine lokale Vertiefung oder Abflachung an einem zylindrischen Außenumfang des ersten Kopplungsbauteils gebildet ist. In dieser oder auch in anderen Varianten, die einen Bremskörper verwenden, ist es vorteilhaft, eine Mehrzahl von Bremskörpern zu nutzen, die vorteilhaft in gleichmäßigen Winkelabständen voneinander um die Drehachse herum verteilt sind. Auf diese Weise ergibt sich eine ausgewogene mechanische Belastung der Antriebsanordnung im Bremsfall und eine Beanspruchung der Drehachsen in Richtungen quer zur Drehachse wird weitestgehend vermieden.

Ein Bremskörper einer Bremsanordnung kann zur Realisierung der vorliegenden Erfindung in besonders einfacher Weise richtungsabhängig gesteuert werden, indem bei einer Übertragung einer Drehkraft von der Arbeitswelle zur Motorantriebswelle in einer vorbestimmten Drehrichtung der Bremskörper durch das erste Kopplungsbauteil gegen die Bremsfläche gedrückt wird, und bei einer Übertragung einer Drehkraft von der Motorantriebswelle zur Arbeitswelle in der vorbestimmten Drehrichtung der Bremskörper durch das zweite Kopplungsbauteil in eine Richtung zum Lösen des Eingriffs mit der Bremsfläche bewegt wird. Abhängig davon, von welchem Bauteil die Drehkraft eingeleitet wird (der Arbeitswelle oder der Motorantriebswelle) bewegt das diesem Element jeweils zugeordnete Kopplungsbauteil den Bremskörper dann entweder zu der Bremsfläche hin oder von der Bremsfläche weg. Abhängig von der Kraftfluss-Richtung wird die Drehung somit durch Anlage des Bremskörpers an der Bremsfläche abgebremst (bei Eingabe einer Drehkraft in die Arbeitswelle) oder der Bremskörper wird von der Bremsfläche weggedrückt und die Bremswirkung wird aufgehoben (bei Eingabe der Drehkraft über die Motorantriebswelle).

Nach einem zweiten Aspekt der vorliegenden Erfindung wir die oben genannte Erfindungsaufgabe gelöst durch eine Klappensteuerung, umfassend eine um eine Schwenkachse schwenkbar gelagerte Klappe, einen Motor und eine Antriebsanordnung nach dem ersten Aspekt der vorliegenden Erfindung, wobei die Motorachse die Antriebskraft des Motors bereitstellt und wobei die Arbeitsachse die Schwenkachse bewegt, um die Klappe in einer Öffnungsrichtung und einer Schließrichtung zu betätigen. Mit einer Klappensteuerung des zweiten Aspekts der Erfindung können die vorstehend im Zusammenhang mit dem ersten Aspekt der Erfindung erläuterten Vorteile und Funktionen für die Ansteuerung der Bewegung einer Klappe, beispielsweise im Fahrzeugbau bei einer Heckklappe eines Fahrzeugs, ausgenutzt werden. Alternativ kann die Klappensteuerung zum Verschwenken von Türen oder anderen Bauteilen eingesetzt werden, die um einen vorbestimmten Winkelbereich elektromechanischen zu verschwenken sind.

Zur Ermöglichung einer kompakten Anordnung ist vorzugsweise die Schwenkachse koaxial zur Arbeitsachse angeordnet oder ist durch die Arbeitsachse gebildet. Die Klappensteuerung kann dann insbesondere auch optisch unauffällig und bauraumsparend in eine Scharnieranordnung der Klappe integriert werden und weist somit insbesondere Vorteile gegenüber einer bekannten Dreiecks-Konfiguration mit einem teleskopierbaren Zylinder zwischen Klappe und Rahmen auf.

Die Vorteile der vorliegenden Erfindung, insbesondere der richtungsabhängigen Bremsanordnung, kommen insbesondere zum Tragen, wenn die Klappe in der Schließrichtung abgesenkt wird und die Bremsanordnung einer Bewegung der Klappe in der Schließrichtung die erste (höhere) Bremskraft entgegensetzt. Die erste Bremskraft kann dann zum Halten der Klappe bei stillstehendem Motor genutzt werden, während bei einer motorgesteuerten Aufwärtsbewegung der Klappe eine geringere oder keine Bremskraft wirkt, sodass der Motor seine Leistung in effektiver Weise zur Überwindung der Schwerkraft der Klappe einsetzen kann.

Die Erfindung wird nachfolgend anhand bevorzugter Ausführungsbeispiele unter Bezugnahme auf die beigefügten Zeichnungen näher erläutert. Es zeigen:
- Figur 1:: Eine Gesamtansicht der Antriebsanordnung gemäß einem ersten Ausführungsbeispiel der vorliegenden Erfindung in einem Schnitt entlang der Drehachse,
- Figur 2:: Eine vergrößerte Ansicht eines Ausschnitts aus Figur 1 im Bereich ein Kopplung der Antriebsanordnung,
- Figur 3:: Eine perspektivische Explosionsdarstellung der Kopplung der Antriebsanordnung,
- Figur 4:: Eine weitere perspektivische Explosionsdarstellung der Kopplung der Antriebsanordnung,
- Figur 5a:: Eine Schnittansicht der Kopplung gemäß einer Schnittlinie A-A in Figur 2 bei Motorantrieb in einer ersten Drehrichtung,
- Figur 5b:: Eine Schnittansicht gemäß einer Schnittlinie B-B in Figur 2 bei Motorantrieb in der ersten Drehrichtung,
- Figuren 6a und 6b:: Ansichten gemäß Figuren 5a und 5b, jedoch für einen Motorantrieb in einer zweiten Drehrichtung,
- Figuren 7a und 7b:: Ansichten gemäß Figuren 5a und 5b, jedoch für einen klappenseitigen Antrieb in der ersten Drehrichtung, und
- Figuren 8a und 8b:: Ansichten gemäß Figuren 5a und 5b, jedoch für einen klappenseitigen Antrieb in der zweiten Drehrichtung,
- Figur 9:: Eine Ansicht analog Figur 5b, jedoch für eine Antriebseinheit gemäß einem zweiten Ausführungsbeispiel der vorliegenden Erfindung.

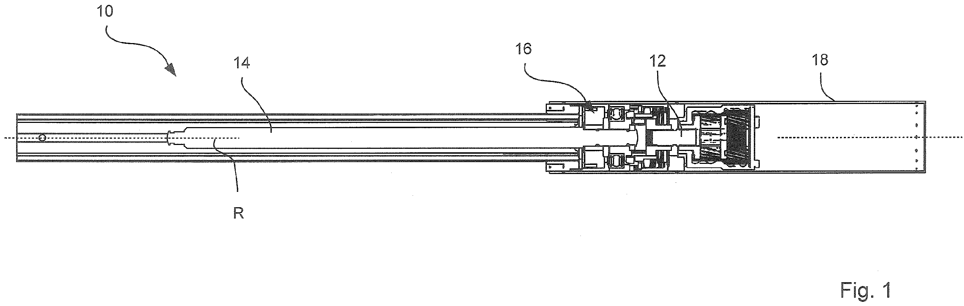

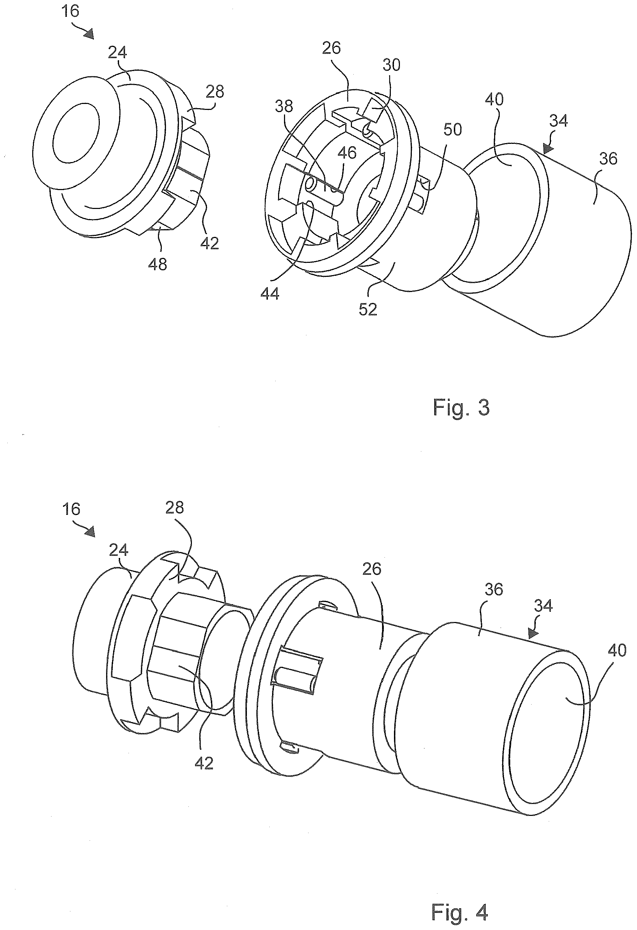

Eine Antriebsanordnung gemäß einem ersten Ausführungsbeispiel der vorliegenden Erfindung ist in den Figuren 1 bis 8 allgemein mit 10 bezeichnet und umfasst eine Motorantriebswelle 12, welche Antriebskraft eines in den Zeichnungen nicht dargestellten Motors bereitstellt, eine Arbeitswelle 14, welche an ein damit verbundenes Arbeitselement (ebenfalls nicht dargestellt) Drehkraft abgibt oder von diesem Arbeitselement Drehkraft aufnimmt, sowie eine zwischen Motorantriebswelle 12 und Arbeitswelle 14 angeordnete Kopplung 16, um Drehkraft von der Motorantriebswelle 12 zur Arbeitswelle 14 oder von der Arbeitswelle 14 zur Motorantriebswelle 12 zu übertragen. Motorantriebswelle 12 und Antriebswelle 14 sind vorzugsweise koaxial zueinander angeordnet. Die genannten Bauteile der Antriebsanordnung sind in einem Gehäuse 18 untergebracht und insbesondere in dem Gehäuse 18 um eine Drehachse R drehbar gelagert. Das Gehäuse kann dementsprechend insbesondere eine zylindrische Form mit der Drehachse R als Zylinderachse aufweisen.

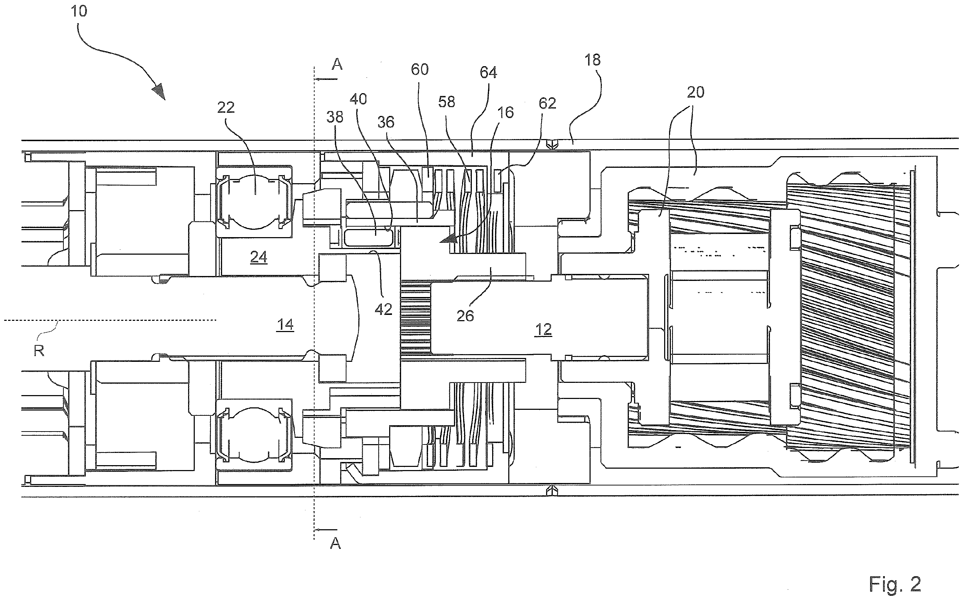

Wie insbesondere in Figur 2 zu sehen ist, ist die Motorantriebswelle 12 (oder Motorausgangswelle) drehfest mit einem Rotor 20 eines nicht weiter illustrierten Motors, insbesondere Elektromotors, verbunden, um Drehkraft des Motors in die Antriebsanordnung 10 einzugeben. Der Motor ist vorzugsweise in dem Gehäuse 18 untergebracht und in diesem befestigt. Die Arbeitswelle 14 ist an einem Lager 22 drehbar im Gehäuse 18 gelagert. Einander zugewandte Enden der Motorantriebswelle 12 und der Arbeitswelle 14 sind drehfest mit zugeordneten Kopplungsbauteilen der Kopplung 16 verbunden, wie im Folgenden näher auszuführen ist.

Unter Bezugnahme auf Figuren 2 bis 4 wird der Aufbau der Kopplung 16 näher erläutert. Die Kopplung 16 umfasst ein drehfest mit der Arbeitswelle 14 verbundenes erster Kopplungsbauteil 24 sowie ein drehfest mit der Motorantriebswelle 12 verbundenes zweites Kopplungsbauteil 26. Die Kopplungsbauteile 24, 26 können formschlüssig miteinander in Eingriff gebracht sein, um Drehkraft aufeinander zu übertragen. Der Formschluss kann durch mindesten einen Vorsprung 28 realisiert sein, der von einem der beiden Kopplungsbauteile 24, 26 aus vorsteht und in eine zugeordnete Vertiefung 30 des anderen der beiden Kopplungsbauteile 24, 26 eingreift. Bei Drehung der Kopplungsbauteile 24, 26 relativ zueinander können sich dann Vorsprung 28 und Vertiefung 30 in Umfangsrichtung einander mitnehmen. Im illustrierten Ausführungsbeispiel sind in Umfangsrichtung verteilt eine Mehrzahl von Vorsprüngen 28 (z. B. vier Vorsprünge) vorgesehen, die in eine entsprechende Anzahl von Vertiefungen 30 eingreifen, sodass die Kopplungsbauteile 24, 26 in der Art einer Verzahnung miteinander in Eingriff sind.

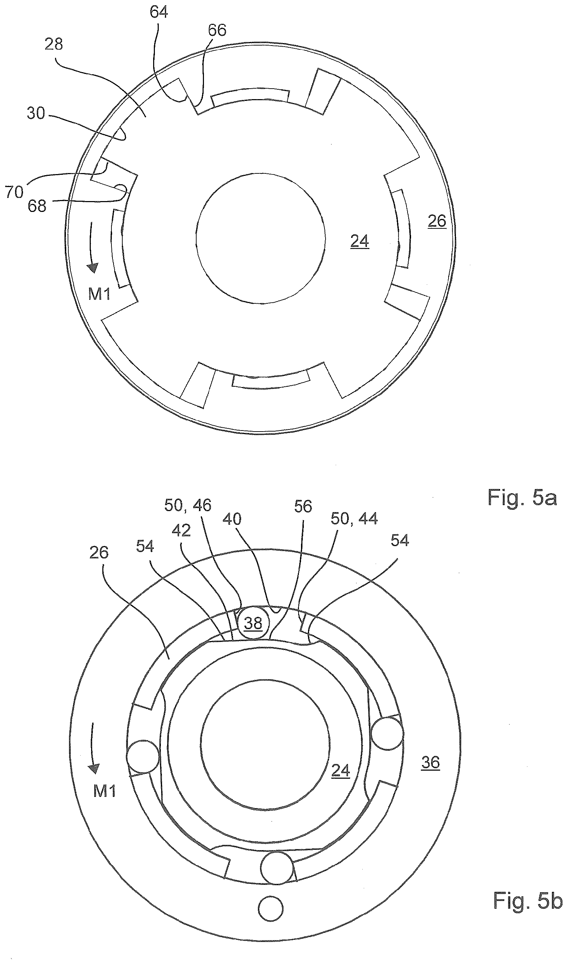

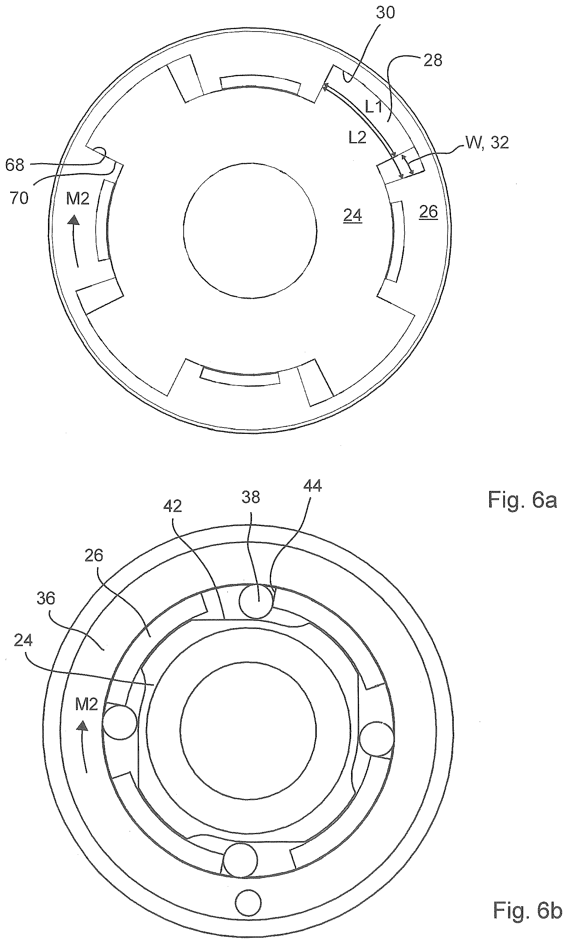

In den Figuren 5a, 6a, 7a und 8a sind die Vorsprünge 28 und die Vertiefungen 30 im Schnitt dargestellt. Zu erkennen ist in Fig. 6a, dass ein Vorsprung 28 des ersten Kopplungsbauteils 24 sich über eine Umfangslänge L1 erstreckt, welche vorzugsweise kleiner ist als eine Umfangslänge L2 einer zugeordneten Vertiefung 30, sodass zwischen Vorsprung 28 und Vertiefung 30 in Umfangsrichtung ein Spalt 32 verbleibt. Der Spalt 32 entspricht einem Leerlaufwinkel W, innerhalb dessen sich die beiden Kopplungsbauteile 24, 26 frei gegeneinander verdrehen können.

Die Antriebsanordnung 10 umfasst ferner eine Bremsanordnung 34, welche vorzugsweise im Bereich der Kopplung 16 angeordnet ist. Erfindungsgemäß umfasst die Bremsanordnung 34 einen Bremszylinder 36 sowie mindestens einen Bremskörper 38, der zwischen einer inneren zylindrischen Bremsfläche 40 des Bremszylinders 36 und einer Steuerfläche 42 des ersten Kopplungsbauteils 24 aufgenommen ist. Der Bremskörper 38 ist als Wälzkörper, insbesondere als zylindrische Walze, ausgebildet und rollt in einer die Steuerfläche 42 ausbildenden Vertiefung oder Abflachung am Außenumfang des ersten Kopplungsbauteils 24 beziehungsweise an der inneren Bremsfläche 40 des Bremszylinders 36. Ein Paar von Bremskörper-Anschlagsflächen 44, 46 begrenzen die Bewegung des Bremskörpers 38 in Umfangsrichtung in beiden Richtungen.

Besonders platzsparend kann die Bremsanordnung 34 ohne signifikante Vergrößerung des Bauraums der Kopplung 16 in diese integriert werden. Hierzu kann, wie im illustrierten Ausführungsbeispiel verwirklicht, die Steuerfläche 42 an einem zylindrischen Vorsprung 48 des ersten Kopplungsbauteils 24 vorgesehen sein, welcher in axialer Richtung der Drehachse R in das zweite Kopplungsbauteil 26 eingeschoben ist. In einem der Steuerfläche 42 zugeordneten Umfangsabschnitt des zweiten Kopplungsbauteils 26 ist eine Durchgangsöffnung 50 ausgebildet, in welcher der Bremskörper 38 angeordnet ist und welche durch ihre inneren Ränder die Anschläge 44, 46 für den Bremskörper 38 bildet. Eine Wandstärke einer zylindrischen Wandung 52 des zweiten Kopplungsbauteils 26 ist in dem Bereich, der den zylindrischen Vorsprung 48 des ersten Kopplungsbauteils 24 aufnimmt, kleiner als ein Durchmesser des Bremskörpers 38, sodass der auf der Steuerfläche 42 des ersten Kopplungsbauteils 24 aufliegende Bremskörper 38 die Durchgangsöffnung 50 durchsetzt und bis zu einer Außenfläche der zylindrischen Wandung 52 oder darüber hinaus reicht. Daher kann der Bremskörper 38 die innere Bremsfläche 40 des Bremszylinders 36, welcher passend über die Wandung 52 des zweiten Kopplungsbauteils geschoben ist, kontaktieren.

Wie insbesondere in Figuren 5b, 6b, 7b und 8b zu erkennen ist, ist die Steuerfläche 42 vorzugsweise von solcher Form, dass sie an mindestens einem ersten Ende 54 in Umfangsrichtung (das heißt in Rollrichtung des Bremskörpers 38) einen größeren radialen Abstand von der Drehachse R aufweist als in einem mittleren Abschnitt 56. Im mittleren Abstand 56 ist der radiale Abstand zwischen Steuerfläche 42 und der inneren Bremsfläche 40 des Bremszylinders 36 gleich oder größer dem Durchmesser des Bremskörpers 38, sodass der Bremskörper 38 zwischen Steuerfläche 42 und Bremsfläche 40 des Bremszylinders 36 beweglich ist oder gar mit Spiel aufgenommen ist. Im Bereich des ersten Endes 54 der Steuerfläche 42, das heißt entfernt von dem mittleren Abschnitt 56, ist der radiale Abstand zwischen Steuerfläche 42 und Bremszylinder 36 kleiner als der Durchmesser des Bremskörpers 38. Im Ergebnis wird der Bremskörper 38 bei seiner Bewegung vom mittleren Abschnitt 56 zum Ende 54 der Steuerfläche 42 hin in dem Spalt zwischen der Steuerfläche 42 und Bremszylinder 36 eingeklemmt, sodass eine Relativbewegung zwischen dem ersten Kopplungsbauteil 24 und dem Bremszylinder 36 blockiert ist und sich die Bremsanordnung 34 im Bremszustand befindet. Ist der Bremskörper 38 dagegen im mittleren Abschnitt 56 der Steuerfläche 42 angeordnet, so sind das erste Kopplungsbauteil 24 und der Bremszylinder 36 relativ zueinander verdrehbar.

Der Bremszylinder 36 kann, wird aber nicht beansprucht, grundsätzlich unmittelbar mit dem Gehäuse 18 fest verbunden sein beziehungsweise sogar von der Innenwandung des Gehäuses 18 gebildet sein. Erfindungsgemäß ist der Bremszylinder 36 jedoch über eine elastische Einrichtung mit dem Gehäuse 18 gekoppelt, damit es beim Ansprechen der Bremse nicht zu einer schlagartigen Blockierung der Rotation der Arbeitswelle 14 und damit einer möglichen Beschädigung der Antriebsanordnung 10 oder daran angeschlossener Komponenten kommt. Erfindungsgemäß ist die elastische Einrichtung durch eine Schlingfeder 58 realisiert, welche als Torsionsfeder wirkt und an ihrem einen Ende 60 mit dem Bremszylinder 36 verbunden ist und mit ihrem anderen Ende 62 gehäusefest gehalten ist, insbesondere mit einem am Gehäuse 18 befestigten Halteelement 64 verbunden ist.

Nachfolgend wird unter Bezugnahme auf Figuren 5a bis 8b die Funktionsweise der Antriebsanordnung 10 des ersten Ausführungsbeispiels der Erfindung näher erläutert.

In einem in den Figuren 5a und 5b gezeigten ersten Motorbetrieb treibt der nicht dargestellte Motor die Motorantriebswelle 12 und damit das zweite Kopplungsbauteil 26 in einer durch einen Pfeil M1 dargestellten ersten Drehrichtung (in den Zeichnungen entgegengesetzt dem Uhrzeigersinn) an. Im Ergebnis schlägt ein erster Anschlag 64 der Vertiefung 30 des zweiten Kopplungsbauteils 26 (gegebenenfalls nach Durchlaufen eines Teils des Leerlaufwinkels W) in Umfangsrichtung an einem ersten Anschlag 66 des Vorsprungs 28 des ersten Kopplungsbauteils 24 an und nimmt dann bei seiner Drehung das zweite Kopplungsbauteil 24 in Richtung M1 mit (Figur 5a). Wie in Figur 5b zu erkennen ist, wird in dieser Drehstellung der beiden Kopplungsbauteile 24, 26 der Bremskörper 38 durch den Anschlag 44 am inneren Rand der Öffnung 50 im Bereich des mittleren Abschnitts 56 der Steuerfläche 42 gehalten, sodass er aus dem Klemmeingriff mit dem Bremszylinder 36 gelöst ist. Die Drehung des Motors wird somit in eine Drehung des zweiten Kopplungsbauteils 24 und damit der Arbeitswelle 14 in Drehrichtung M1 umgesetzt.

Wird die Drehrichtung des Motors umgekehrt, sodass sich das zweite Kopplungsbauteil 26, wie in Figur 6a gezeigt, in einer der ersten Drehrichtung M1 entgegengesetzten zweiten Drehrichtung M2 (in den Zeichnungen im Uhrzeigersinn) dreht, so schlägt ein dem ersten Anschlag 64 der Vertiefung 30 gegenüberliegender zweiter Anschlag 68 der Vertiefung 30 gegen einen dem ersten Anschlag 66 des Vorsprungs 28 gegenüberliegenden zweiten Anschlag 70 des Vorsprungs 28 (gegebenenfalls nach Durchlaufen zumindest eines Teils des Leerlaufwinkels W), sodass das zweite Kopplungsbauteil 26 das erste Kopplungsbauteil 24 in der zweiten Drehrichtung M2 mitnimmt. Wie in Figur 6b zu erkennen ist, liegt in dieser Drehstellung der zweite Anschlag 46 am Innenrand der Öffnung 50 des zweiten Kopplungsbauteils 26 am Bremskörper 38 an und hält den Bremskörper im mittleren Abschnitt 56 der Steuerfläche 42, sodass auch bei Drehung in der zweiten Drehrichtung der Bremskörper 38 nicht in Klemmeingriff mit dem Bremszylinder 36 ist und die gemeinsame Drehung der Kopplungsbauteile 24, 26 relativ zum Bremszylinder 36 nicht behindert. Im Ergebnis wird die Drehkraft der Motorantriebswelle 12 in der zweiten Drehrichtung M2 auf die Arbeitswelle 14 übertragen.

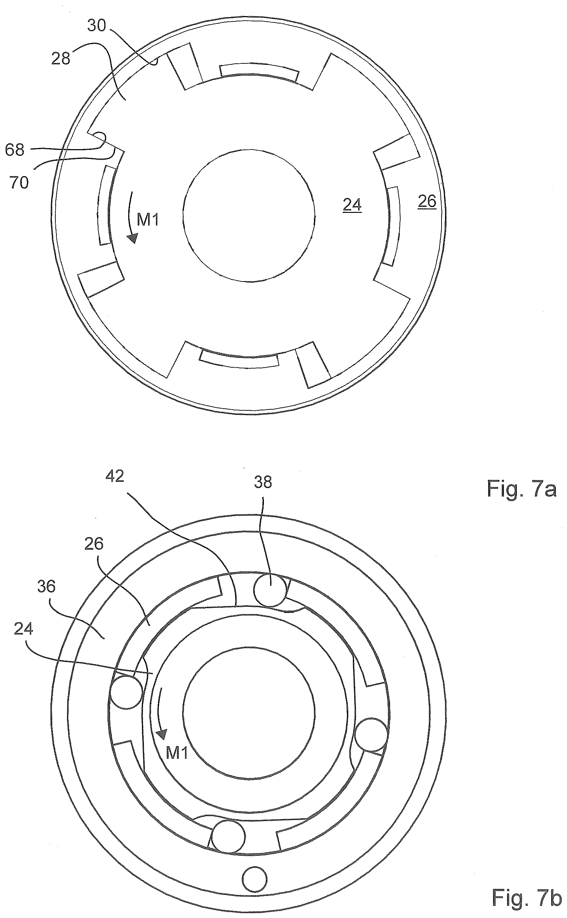

Die Figuren 7a und 7b zeigen den Fall, dass eine Drehkraft in der ersten Drehrichtung M1 in die Arbeitswelle 14 eingegeben wird und dementsprechend das erste Kopplungsbauteil 24 in der ersten Drehrichtung M1 gedreht wird. Das erste Kopplungsbauteil 24 gelangt dann mit dem zweiten Anschlag 70 des Vorsprungs 28 in Anlage am zweiten Anschlag 68 der Vertiefung 30 und nimmt somit das zweite Kopplungsbauteil 26 in der ersten Drehrichtung M1 mit. Wie in Figur 7b dargestellt, weist die Steuerfläche 42 des erste Kopplungsbauteils 24 eine solche Kontur auf, dass der Bremskörper 38 auch weiterhin aus dem Eingriff mit dem Bremszylinder 36 gelöst ist, wenngleich er sich etwas von dem mittleren Abschnitt 56 entfernt und zu einem dem ersten Ende 54 der Steuerfläche 42 entgegengesetzten, zweiten Ende 55 hin bewegt hat. Aus dem Vergleich der Figuren 6b und 7b ist zu sehen, dass im ersten Ausführungsbeispiel die Steuerfläche 42 so gebildet ist, dass dann, wenn der zweite Anschlag 68 des zweiten Kopplungsbauteils 26 am zweiten Anschlag 70 des ersten Kopplungsbauteils 24 anschlägt, der Bremskörper 38 sich frei zwischen den gegenüberliegenden Rändern 44, 46 der Durchgangsöffnung 50 bewegen kann, ohne Bremswirkung mit dem Bremszylinder 36 zu entfalten. Bei einer Einleitung einer Drehkraft in die Arbeitswelle 14 in der ersten Drehrichtung M1 wird die Drehbewegung somit im Wesentlichen ohne Wirkung einer Bremskraft auf die Motorantriebswelle 12 übertragen.

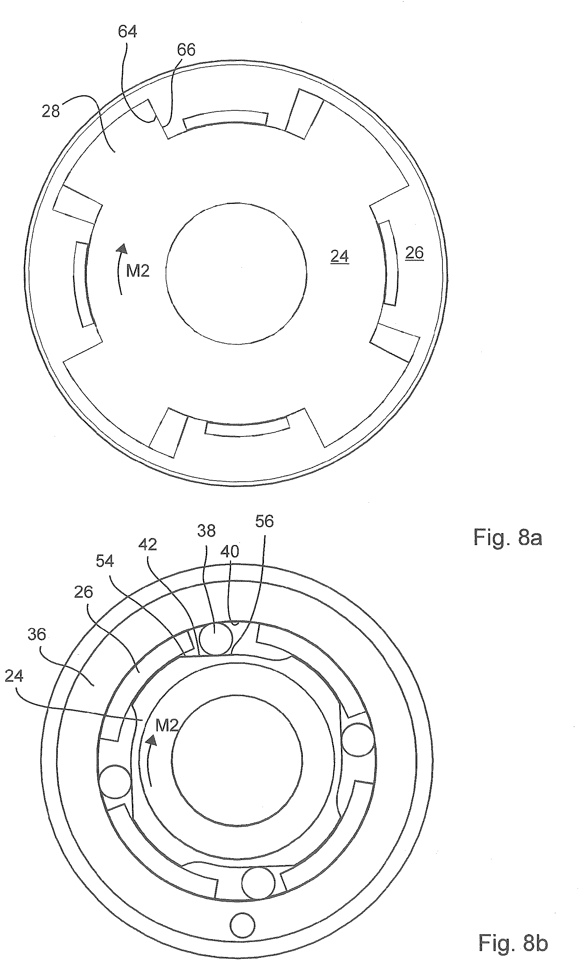

Wirkt auf die Arbeitswelle 14 eine Drehkraft in der zweiten Drehrichtung M2 (Fig. 8A und 8b), so gelangt wiederum der erste Anschlag 66 des Vorsprungs 28 in Anlage gegen den ersten Anschlag 64 der Vertiefung 30, sodass Drehkraft in der zweiten Drehrichtung M2 von dem ersten Kopplungsbauteil 24 auf das zweite Kopplungsbauteil 26 übertragen wird. Wie in Figur 8b gezeigt ist, rollt jedoch bei der Drehung des ersten Kopplungsbauteils 24 in der zweiten Drehrichtung M2 der Bremskörper 38 an der Steuerfläche 42 ausgehend von dem mittleren Abschnitt 56 zum Ende 54 der Steuerfläche 42 hin ab. Da an dem Ende 54 der zweiten Steuerfläche 42 der radiale Abstand zwischen der Steuerfläche 42 und der Bremsfläche 40 des Bremszylinders 36 kleiner wird, drückt die zweite Steuerfläche 42 den Bremskörper 38 dabei zunehmend in Richtung des Bremszylinders 36, bis der Bremskörper 38 schließlich zwischen Bremszylinder 36 und Steuerfläche 42 eingeklemmt ist. Die Drehkraft des ersten Kopplungsbauteils 24 wird somit in den Bremszylinder 36 eingeleitet, welcher fest oder über die Federanordnung 58 mit dem Gehäuse 18 verbunden ist. Die Drehung des ersten Kopplungsbauteils 24 wird somit abgebremst beziehungsweise vollständig blockiert und somit nur gebremst beziehungsweise überhaupt nicht in eine Drehbewegung der Motorantriebswelle 12 umgesetzt.

Die vorstehend beschrieben Antriebsanordnung gemäß dem ersten Ausführungsbeispiel der Erfindung kann vorteilhaft als Teil einer Klappensteuerung verwendet werden, in welcher an der Arbeitswelle 14 eine Klappe, beispielsweise eine Tür eines Kraftfahrzeugs, eine Gebäudetür oder dergleichen, montiert ist, sodass die Klappe durch einen mit der Motorantriebswelle 12 gekoppelten Motor elektromechanisch geöffnet und geschlossen werden kann. Beispielsweise kann dann die Drehrichtung M1 eine Richtung zum Öffnen der Klappe sein und die Drehrichtung M2, die der ersten Drehrichtung M1 entgegengesetzt ist, kann eine Richtung zum Schließen der Klappe sein. Gemäß dem oben beschriebenen Betrieb der Figuren 5a, 5b, 6a, 6b ist der Motor dann zum Öffnen beziehungsweise Schließen der Klappe betreibbar, während bei Ausübung einer Kraft auf die Klappe durch einen Benutzer oder aufgrund der Schwerkraft oder aufgrund anderer äußerer Einflüsse, Drehkraft in die Arbeitswelle 14 in Öffnungsrichtung (Figuren 7a und 7b) oder in Schließrichtung (Figuren 8a und 8b) eingegeben werden kann. Im illustrierten ersten Ausführungsbeispiel wird dann eine Öffnungsbewegung der Klappe, beispielsweise durch manuelle Betätigung durch einen Nutzer, ermöglicht, während eine Schließbewegung der Klappe gebremst beziehungsweise blockiert wird. Eine solche Klappensteuerung ist beispielsweise von Vorteil im Falle einer in vertikaler Richtung verschwenkbaren Klappe (zum Beispiel Heckklappe eines Fahrzeugs), bei welcher bei nicht angetriebenem Motor die Schließbewegung der Klappe aufgrund der Schwerkraft verhindert werden soll, das heißt die Klappe in der angefahrenen Stellposition festgehalten oder festgestellt werden soll.

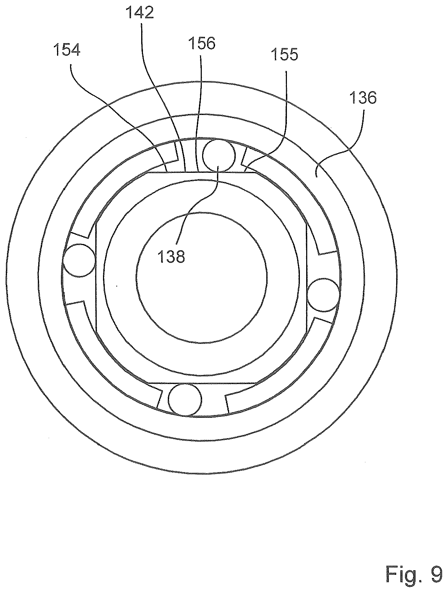

In Figur 9 ist ein zweites Ausführungsbeispiel der vorliegenden Erfindung dargestellt. Im Folgenden wird nur auf die Unterschiede gegenüber dem ersten Ausführungsbeispiel eingegangen und im Übrigen vollständig auf die vorstehende Beschreibung und die Zeichnungen des ersten Ausführungsbeispiels verwiesen.

Das zweite Ausführungsbeispiel unterscheidet sich vom ersten Ausführungsbeispiel durch die Form der Steuerfläche 142. Ein mittlerer Abschnitt 156 der Steuerfläche 142 weist von der Innenseite des Bremszylinders 136 einen Abstand auf, der gleich oder größer ist als der Durchmesser eines dazwischen angeordneten Bremskörpers 138, sodass sich der Bremskörper 138 im mittleren Abschnitt 156 rollend oder frei oder mit Spiel bewegen kann. Mit zunehmender Entfernung vom mittleren Abschnitt 156, und hier im zweiten Ausführungsbeispiel in beiden Richtungen zu einem ersten Ende 154 und zu einem zweiten Ende 155 hin, nimmt der Abstand der Steuerfläche 142 vom Bremszylinder 136 ab. Somit wird der Bremskörper 138 bei seiner Bewegung sowohl in Richtung der ersten Drehrichtung M1 als auch in Richtung der zweiten Drehrichtung M2 vom mittleren Abschnitt 156 weg jeweils zwischen Steuerfläche 142 und Bremszylinder 136 eingeklemmt und blockiert eine Drehbewegung zwischen den Kopplungsbauteilen und dem Bremszylinder 138 und somit eine Drehung der Motorantriebswelle und der Arbeitswelle relativ zum Gehäuse.

Die Antriebsanordnung des zweiten Ausführungsbeispiels erlaubt auf diese Weise eine Übertragung von Drehkraft von der Motorantriebswelle zur Arbeitswelle in beiden Drehrichtungen M1 und M2 und bremst beziehungsweise blockiert eine Drehbewegung, die auf Einleitung eines Drehmoments von Seiten der Arbeitswelle 14 zurückgeht, in beiden Drehrichtungen M1 und M2. Bei Anwendung einer solchen Antriebsanordnung in einer Klappensteuerung der vorstehend beschriebenen Art wäre die Klappe dann in jeder durch den Motor eingestellten Position in beiden Richtungen festgestellt, das heißt lässt sich dann weder durch Schwerkraft noch durch manuelle Benutzung weiter verschwenken.

## Patentansprüche

1. Antriebsanordnung (10), umfassend
eine Motorantriebswelle (12), welche Antriebskraft eines Motors bereitstellt,
eine Arbeitswelle (14), über welche die Antriebsanordnung Drehkraft abgibt und empfängt,
eine Kopplung (16), welche dafür eingerichtet ist, Drehkraft von der Motorantriebswelle zur Arbeitswelle und von der Arbeitswelle zur Motorantriebswelle zu übertragen, und
eine Bremsanordnung (34), welche einer Drehbewegung der Arbeitswelle eine Bremskraft entgegensetzt, wobei
die Bremsanordnung (34) bei Übertragung einer Drehkraft von der Arbeitswelle zur Motorantriebswelle der Drehbewegung eine erste Bremskraft entgegensetzt,
die Bremsanordnung (34) bei Übertragung einer Drehkraft von der Motorantriebswelle zur Arbeitswelle der Drehbewegung eine zweite Bremskraft entgegensetzt, die kleiner ist als die erste Bremskraft, oder im Wesentlichen keine Bremskraft entgegensetzt,
die Kopplung (16) ein erstes Kopplungsbauteil (24) aufweist, welches an einem Element aus Arbeitswelle und Motorantriebswelle angeordnet oder ausgebildet ist, und die Kopplung ein zweites Kopplungsbauteil (26) aufweist, welches an dem anderen Element aus Arbeitswelle und Motorantriebswelle angeordnet oder ausgebildet ist, wobei die beiden Kopplungsbauteile (24, 26) zur Übertragung von Drehkraft miteinander gekoppelt oder koppelbar sind,
die Bremsanordnung (34) einen Bremszylinder (36) sowie mindestens einen Bremskörper (38) umfasst, welcher zwischen einer inneren zylindrischen Bremsfläche (40) des Bremszylinders (36) und einer Steuerfläche (42) des ersten Kopplungsbauteils (249 aufgenommen ist;
wobei der Bremskörper (38) als Wälzkörper ausgebildet ist und in einer die Steuerfläche (42) ausbildenden Vertiefung oder Abflachung am Außenumfang des ersten Kopplungsbauteils (24) beziehungsweise an der inneren Bremsfläche (40) des Bremszylinders (36) rollt, wobei ein Paar von Anschlagflächen (44, 46) die Bewegung des Bremskörpers (38) in Umfangsrichtung in beiden Richtungen begrenzt;
in einem Gehäuse (18) der Antriebsanordnung (10) die Motorantriebswelle (12), die Arbeitswelle (14) und die Kopplung (16) untergebracht sind, und
der Bremszylinder (36) über eine elastische Einrichtung mit dem Gehäuse (18) gekoppelt ist; **dadurch gekennzeichnet, dass**
die elastische Einrichtung durch eine Schlingfeder (58) realisiert ist, welche als Torsionsfeder wirkt und an ihrem einen Ende (60) mit dem Bremszylinder (36) verbunden ist und mit ihrem anderen Ende (62) gehäusefest gehalten ist.

2. Antriebsanordnung (10) nach Anspruch 1, **dadurch gekennzeichnet, dass** die Kopplung zur Übertragung von Drehkraft in beide Drehrichtungen eingerichtet ist.

3. Antriebsanordnung (10) nach Anspruch 2, **dadurch gekennzeichnet, dass** die Bremsanordnung (34) bei Übertragung einer Drehkraft von der Arbeitswelle zur Motorantriebswelle in einer zweiten Drehrichtung (M2) der Drehbewegung die erste Bremskraft entgegensetzt, und
die Bremsanordnung bei Übertragung einer Drehkraft von der Arbeitswelle zur Motorantriebswelle in einer der zweiten Drehrichtung (M2) entgegengesetzten ersten Drehrichtung (M1) der Drehbewegung eine dritte Bremskraft entgegensetzt, die kleiner ist als die erste Bremskraft, oder im Wesentlichen keine Bremskraft entgegensetzt.

4. Antriebsanordnung (10) nach Anspruch 1, **dadurch gekennzeichnet, dass** das erste Kopplungsbauteil (24) einen ersten Anschlag (70) aufweist, welcher in Bezug auf die Drehachse (R) in Umfangsrichtung an einem zweiten Anschlag (68) des zweiten Kopplungsbauteils (26) anschlägt, um den zweiten Anschlag (68) bei einer Drehung in einer ersten Drehrichtung (M1) mitzunehmen und Drehkraft auf das zweite Kopplungsbauteil (26) in der ersten Drehrichtung (M1) zu übertragen.

5. Antriebsanordnung (10) nach Anspruch 4, **dadurch gekennzeichnet, dass** das erste Kopplungsbauteil (24) einen dritten Anschlag (66) aufweist, welcher in Bezug auf die Drehachse in Umfangsrichtung an einem vierten Anschlag (64) des zweiten Kopplungsbauteils (26) anschlägt, um den vierten Anschlag (64) bei einer Drehung in einer der ersten Drehrichtung (M1) entgegengesetzten zweiten Drehrichtung (M2) mitzunehmen und Drehkraft auf das zweite Kopplungsbauteil (26) in der zweiten Drehrichtung (M2) zu übertragen,
wobei dann, wenn der dritte Anschlag (66) an dem vierten Anschlag (64) anschlägt, der erste Anschlag (70) im Abstand (32) von dem zweiten Anschlag (62) angeordnet ist, so dass ein vorbestimmter Leerlaufwinkel (W) zwischen den Kopplungsbauteilen (24, 26) vorhanden ist.

6. Klappensteuerung, umfassend
eine um eine Schwenkachse schwenkbar gelagerte Klappe,
einen Motor und
eine Antriebsanordnung (10) nach einem der vorhergehenden Ansprüche, wobei die Motorachse die Antriebskraft des Motors bereitstellt und wobei die Arbeitsachse die Schwenkachse bewegt, um die Klappe in einer ersten Schwenkrichtung und einer zweiten Schwenkrichtung zu betätigen.

7. Klappensteuerung nach Anspruch 6, **dadurch gekennzeichnet, dass** die Schwenkachse koaxial zur Arbeitsachse verläuft oder durch die Arbeitsachse gebildet ist.

8. Klappensteuerung nach Anspruch 6 oder Anspruch 7, **dadurch gekennzeichnet, dass** sich die Klappe in der ersten Schwenkrichtung absenkt und dass die Bremsanordnung einer Bewegung der Klappe in der zweiten Schwenkrichtung die erste Bremskraft entgegensetzt.

## Claims

1. Drive arrangement (10), comprising
a motor drive shaft (12) which provides driving force of a motor,
a working shaft (14) via which the drive arrangement delivers and receives rotary force,
a coupling (16) which is configured to transmit rotary force from the motor drive shaft to the working shaft and from the working shaft to the motor drive shaft, and
a brake arrangement (34) which opposes a rotation movement of the working shaft with a braking force, wherein
the brake arrangement (34) opposes the rotation movement with a first braking force when a rotary force is transmitted from the working shaft to the motor drive shaft,
the brake arrangement (34) opposes the rotation movement with a second braking force which is smaller than the first braking force, or with substantially no braking force, when a rotary force is transmitted from the motor drive shaft to the working shaft,
the coupling (16) has a first coupling component (24) which is arranged or formed on one element out of the working shaft and the motor drive shaft, and the coupling has a second coupling component (26) which is arranged or formed on the other element out of the working shaft and the motor drive shaft, wherein the two coupling components (24, 26) are coupled or couplable to one another for the transmission of rotary force,
the brake arrangement (34) comprises a brake cylinder (36) and at least one brake body (38) which is accommodated between an inner cylindrical brake surface (40) of the brake cylinder (36) and a control surface (42) of the first coupling component (24);
wherein the brake body (38) is configured as a rolling element and rolls in a depression or a flattening on the outer circumference of the first coupling component (24) forming the control surface (42) or on the inner brake surface (40) of the brake cylinder (36), wherein a pair of stop surfaces (44, 46) limits the movement of the brake body (38) in the circumferential direction in both senses;
the motor drive shaft (12), the working shaft (14) and the coupling (16) are accommodated in a housing (18) of the drive arrangement (10), and
the brake cylinder (36) is coupled via a resilient device to the housing (18); **characterised in that**
the resilient device is realised by means of a wrap spring (58) which acts as a torsion spring and is connected at one of its ends (60) to the brake cylinder (36) and at the other end (62) is fixed to the housing.

2. Drive arrangement (10) according to claim 1, **characterised in that** the coupling is configured for transmitting rotary force in both rotation directions.

3. Drive arrangement (10) according to claim 2, **characterised in that** the brake arrangement (34) opposes the rotation movement with the first braking force when a rotary force is transmitted from the working shaft to the motor drive shaft in a second rotation direction (M2), and
the brake arrangement opposes the rotation movement with a third braking force which is smaller than the first braking force, or with substantially no braking force, when a rotary force is transmitted from the working shaft to the motor drive shaft in a first rotation direction (M1) opposing the second rotation direction (M2).

4. Drive arrangement (10) according to claim 1, **characterised in that** the first coupling component (24) has a first stop (70) which makes contact against a second stop (68) of the second coupling component (26) in the circumferential direction relative to the rotation axis (R), in order to carry the second stop (68) along during a rotation in a first rotation direction (M1) and to transmit rotary force to the second coupling component (26) in the first rotation direction (M1).

5. Drive arrangement (10) according to claim 4, **characterised in that** the first coupling component (24) has a third stop (66) which makes contact against a fourth stop (64) of the second coupling component (26) in the circumferential direction relative to the rotation axis (R), in order to carry the fourth stop (64) along during a rotation in a second rotation direction (M2) opposed to the first rotation direction (M1) and to transmit rotary force to the second coupling component (26) in the second rotation direction (M2),
wherein, when the third stop (66) makes contact against the fourth stop (64), the first stop (70) is arranged at a spacing (32) from the second stop (62), so that there is a pre-determined idling angle (W) between the coupling components (24, 26).

6. Hatch control system, comprising
a hatch mounted so as to be pivotable about a pivot axis,
a motor and
a drive arrangement (10) according to one of the preceding claims, wherein the motor axis provides the driving force of the motor and wherein the working axis moves the pivot axis in order to actuate the hatch in a first pivot direction and a second pivot direction.

7. Hatch control system according to claim 6, **characterised in that** the pivot axis extends coaxially with the working axis or is formed by the working axis.

8. Hatch control system according to claim 6 or claim 7, **characterised in that** the hatch falls in the first pivot direction and that the brake arrangement opposes a movement of the hatch in the second pivot direction with the first braking force.

## Revendications

1. Dispositif d'entraînement (10) comprenant :
un arbre d'entraînement de moteur (12) qui met à disposition la force d'entraînement d'un moteur,
un arbre de travail (14) par l'intermédiaire duquel le dispositif d'entraînement génère et reçoit une force rotative,
un couplage (16), qui est conçu pour transmettre la force rotative de l'arbre d'entraînement du moteur à l'arbre de travail et de l'arbre de travail à l'arbre d'entraînement du moteur et
un dispositif de freinage (34) qui oppose une force de freinage à un mouvement de rotation de l'arbre de travail,
le dispositif de freinage (34) opposant au mouvement de rotation, lors de la transmission d'une force rotative de l'arbre de travail à l'arbre d'entraînement du moteur, une première force de freinage,
le dispositif de freinage (34) opposant au mouvement de rotation, lors de la transmission d'une force rotative de l'arbre d'entraînement du moteur à l'arbre de travail, une deuxième force de freinage qui est inférieure à la première force de freinage, ou n'oppose à peu près aucune force de freinage,
le couplage (16) comprenant un premier composant de couplage (24) qui est disposé ou réalisé sur un élément parmi l'arbre de travail et de l'arbre d'entraînement du moteur et le couplage comprenant un deuxième composant de couplage (26) qui est disposé ou réalisé sur l'autre élément parmi l'arbre de travail et de l'arbre d'entraînement du moteur, les deux composants de couplage (24, 26) étant couplés ou pouvant être couplés entre eux pour la transmission d'une force rotative,
le dispositif de freinage (34) comprenant un cylindre de freinage (36) ainsi qu'au moins un corps de freinage (38), qui est logé entre une surface de freinage cylindrique interne (40) du cylindre de freinage (36) et une surface de commande (42) du premier composant de couplage (24) ;
le corps de freinage (38) étant conçu comme un corps de rouleau et roulant dans une cavité formant la surface de commande (42) ou un aplatissement sur la circonférence externe du premier composant de couplage (24) ou sur la surface de freinage interne (40) du cylindre de freinage (36), une paire de surfaces de butée (44, 46) limitant le déplacement du corps de freinage (38) dans la direction circonférentielle dans les deux sens ;
l'arbre d'entraînement du moteur (12), l'arbre de travail (14) et le couplage (16) étant logés dans un boîtier (18) du dispositif d'entraînement (10) et
le cylindre de freinage (36) étant couplé par l'intermédiaire d'un dispositif élastique avec le boîtier (18) ; **caractérisé en ce que**
le dispositif élastique est réalisé à l'aide d'un ressort à enroulement (58), qui agit comme un ressort de torsion, est relié, à une de ses extrémités (60), avec le cylindre de freinage (36) et est maintenu solidaire du boîtier avec son autre extrémité (62).

2. Dispositif d'entraînement (10) selon la revendication 1, **caractérisé en ce que** le couplage est conçu pour la transmission de la force rotative dans les deux sens.

3. Dispositif d'entraînement (10) selon la revendication 2, **caractérisé en ce que** le dispositif de freinage (34) oppose au mouvement de rotation la première force de freinage lors d'une transmission d'une force rotative de l'arbre de travail à l'arbre d'entraînement du moteur dans un deuxième sens de rotation (M2) et
le dispositif de freinage oppose au mouvement de rotation une troisième force de freinage lors d'une transmission d'une force rotative de l'arbre de travail à l'arbre d'entraînement du moteur dans un premier sens de rotation (M1) opposé au deuxième sens de rotation (M2), cette troisième force de freinage étant inférieure à la première force de freinage, ou n'oppose à peu près aucune force de freinage.

4. Dispositif d'entraînement (10) selon la revendication 1, **caractérisé en ce que** le premier composant de couplage (24) comprend une première butée (70) qui bute, dans la direction circonférentielle par rapport à l'axe de rotation (R), contre une deuxième butée (68) du deuxième composant de couplage (26), afin d'entraîner la deuxième butée (68) lors d'une rotation dans le premier sens de rotation (M1) et de transmettre la force rotative au deuxième composant de couplage (26) dans le premier sens de rotation (M1).

5. Dispositif d'entraînement (10) selon la revendication 4, **caractérisé en ce que** le premier composant de couplage (24) comprend une troisième butée (66) qui bute, dans la direction circonférentielle par rapport à l'axe de rotation, contre une quatrième butée (64) du deuxième composant de couplage (26), afin d'entraîner la quatrième butée (64) lors d'une rotation dans un deuxième sens de rotation (M2) opposé au premier sens de rotation (M1) et de transmettre la force rotative au deuxième composant de couplage (26) dans le deuxième sens de rotation (M2),
moyennant quoi, lorsque la troisième butée (66) bute contre la quatrième butée (64), la première butée (70) est disposée à distance (32) de la deuxième butée (62), de façon qu'un angle de marche à vide (W) prédéterminé existe entre les composants de couplage (24, 26).

6. Commande de clapet comprenant
un clapet logé de manière pivotante autour d'un axe de pivotement
un moteur et
un dispositif d'entraînement (10) selon l'une des revendications précédentes, l'axe du moteur mettant à disposition la force d'entraînement du moteur et l'axe de travail déplaçant l'axe de pivotement afin d'actionner le clapet dans une première direction de pivotement et dans une deuxième direction de pivotement.

7. Commande de clapet selon la revendication 6, **caractérisé en ce que** l'axe de pivotement est coaxial à l'axe de travail ou est constitué de l'axe de travail.

8. Commande de clapet selon la revendication 6 ou la revendication 7, **caractérisé en ce que** le clapet s'abaisse dans la première direction de pivotement et **en ce que** le dispositif de freinage oppose, au déplacement du clapet dans la deuxième direction de pivotement, la première force de freinage.
